# EUROPEAN PATENT APPLICATION

(11) **EP 4 749 719 A1**
(43) Date of publication of application: **27.05.2026**
(21) Application number: 25218477.5
(22) Date of filing: 25.11.2025
(51) Int. Cl.: H01M 4/58, C01B 25/45, C22B 7/00, H01M 10/052, H01M 10/54

(54) **METHOD FOR RECYCLING OLIVINE-STRUCTURED CATHODE ACTIVE MATERIAL FOR LITHIUM-ION SECONDARY BATTERY, RECYCLED CATHODE ACTIVE MATERIAL OBTAINED THEREFROM, AND LITHIUM-ION SECONDARY BATTERY USING THE SAME**

(30) Priority: 25.11.2024 KR 20240170002; 20.11.2025 KR 20250177250
(71) Applicant: AK tree Co., Ltd, Seoul 06164 (KR); Libus987 Inc, Houston, TX 77036 (US)
(72) Inventor: AHN, Hyo Soo, 44784 Ulsan (KR); LEE, Bong Kee, 04732 Seoul (KR)
(74) Representative: Beck & Rössig European Patent Attorneys

(57) **Abstract**

An object of the invention is to provide a method for economically and environmentally friendly collecting an olivine-structured cathode active material from wastes containing the olivine-structured cathode active material that is structurally stable, a recycled cathode active material obtainable therefrom, and a lithium-ion secondary battery in which the recycled cathode active material is applied. To achieve the above object, the method for recycling the olivine-structured cathode active material includes a step (a) of loading a heat treatment object containing an olivine-structured cathode active material into a heat treatment furnace, a step (b) of raising an internal temperature of the heat treatment furnace to a range of about 150°C to about 400°C, a step (c) of maintaining the increased internal temperature to thermally treat the heat treatment object, and a step (d) of discharging first powder produced after the heat treatment is completed. The first powder comprises recycled olivine-structured cathode active material, and the heat treatment object comprises at least a portion of the waste lithium-ion secondary battery or wastes generated during the cathode active material manufacturing process.

## Description

### BACKGROUND OF THE INVENTION

### 1. Field of the Invention

The present invention relates to a method for recycling an olivine-structured cathode active material, which is capable of being obtained by re-treating wastes containing an olivine-structured cathode active material, and more particularly, to a method for recycling an olivine-structured cathode active material, which is obtained by heat-treating an olivine-structured cathode active material contained in a waste lithium-ion secondary battery or discarded during a process at a low temperature.

### 2. Description of the Related Art

Since electric vehicle batteries are typically discarded after being used for about 5 years to about 10 years, markets related to waste batteries have recently seen substantial growth. It is estimated that the global generation of waste electric vehicle batteries will reach approximately 1.6 million tons by 2030, and various countries, centered around Europe, are making large-scale investments in the development of processes for collecting valuable metals from the waste batteries.

Unlike the reuse, in the industry for recycling the waste batteries, valuable metals may be collected from the waste batteries so as to be reused as raw materials, thereby simultaneously solving environmental problems and stably securing valuable resources.

In the recycling of the waste batteries, valuable metals are generally extracted through wet smelting or dry smelting processes after discharging, dismantling, and pulverizing. Here, the dry smelting process that is suitable for large-scale processing and has a high recovery rate is attracting attention.

In the dry smelting, pulverized powder is heated at a high temperature, and then, organic compounds and polymer components contained within the pulverized powder are incinerated and removed and then is pulverized again to extract the valuable metals through strong acids in a wet manner.

In the dry smelting process, a lot of time and an apparatus for discharging and pulverizing are required, and even after, a complex process is undergone to deteriorate economic efficiency, and the resultant material discharged after being heated to a high temperature contains a large amount of impurities. As a result, an extraction ratio of the valuable components capable of being obtained from the entire powder becomes low and exists in an agglomerated state, and thus, re-pulverizing and the use of strong acids are inevitable to extract the valuable components, thereby raising environmental concerns.

In particular, recently, the application of lithium-ion secondary batteries using iron phosphate lithium with the olivine structure as cathode materials has been increasing, and thus, collecting of the iron phosphate lithium powder from waste lithium-ion secondary batteries has become an important issue.

### SUMMARY OF THE INVENTION

The present invention addresses the above-identified, and other problems associated with conventional methods and apparatuses.

According to an embodiment of the invention, there is provided a method for economically and environmentally friendly collecting an olivine-structured cathode active material from wastes containing the olivine-structured cathode active material that is structurally stable, a recycled cathode active material obtainable therefrom, and a lithium-ion secondary battery in which the recycled cathode active material is applied.

A method for recycling an olivine-structured cathode active material includes: a step (a) of loading a heat treatment object containing an olivine-structured cathode active material into a heat treatment furnace; a step (b) of raising an internal temperature of the heat treatment furnace to a range of about 150°C to about 400°C; a step (c) of maintaining the increased internal temperature to thermally treat the heat treatment object; and a step (d) of discharging first powder produced after the heat treatment is completed, wherein the first powder comprises recycled olivine-structured cathode active material, and the heat treatment object comprises at least a portion of the waste lithium-ion secondary battery or wastes generated during the cathode active material manufacturing process.

In addition, the method may further include, before said step (b), a step of preheating the internal temperature of the heat treatment furnace to a range of about 100°C or less.

In addition, in results of Raman spectrum analysis for the recycled olivine-structured cathode active material, no organic component may be detected.

In addition, in results of X-ray fluorescence analysis (XRF) for the recycled olivine-structured cathode active material, fluorine may be detected at about 2 wt% or less or may not be detected at all.

In addition, the recycled olivine-structured cathode active material may be lithium iron phosphate (LiFePO₄), and an atomic ratio of trivalent ions (Fe³⁺) to divalent ions (Fe²⁺) in the iron ions ([Fe³⁺/[Fe²⁺]) may be about 1.0 or less.

In addition, in the steps (b) and (c), a gas generated inside the heat treatment furnace may be forcibly exhausted.

In addition, in the steps (b) and (c), the gas may be forcibly discharged while reducing a pressure inside the heat treatment furnace.

In addition, in the steps (b) and (c), the gas may be forcibly discharged through a fan disposed in the heat treatment furnace.

In addition, the forced exhaust may be carried out intermittently.

In addition, an exhaust gas discharged through the exhaust may pass through an aqueous solution to dissolve a fluorine component, which is contained in the exhaust gas, in the aqueous solution, thereby collecting the fluorine component.

In addition, after the step (d), the first powder may be washed, and the washing may be carried out with water at a temperature of about 30°C or less.

In addition, the method may further include, after said step (d), a step of classifying and pickling the recycled olivine-structured cathode active material from the first powder.

In addition, the recycled olivine-structured cathode active material contained in the first powder may be powder in which a conductive material is compounded.

In addition, the method may further include a step of mixing the recycled olivine-structured cathode active material with a lithium compound and heat-treating the mixture at a temperature in a range of about 600°C to about 800°C.

In addition, an oxalic acid or an ascorbic acid may be further added to be mixed together with the lithium compound.

In addition, the heat treatment object may be a cathode collected by decomposing the waste lithium-ion secondary battery.

In addition, the method may further include a step of extracting the olivine-structured cathode active material from the first powder through classification.

A recycled olivine-structured cathode active material produced by the above-described method for recycling the olivine-structured cathode active material according to the invention may be provided.

A lithium-ion secondary battery manufactured using the above-described recycled olivine-structured cathode active material according to the invention may be provided.

### BRIEF DESCRIPTION OF THE DRAWINGS

Fig. 1 illustrates an image of a waste lithium-ion secondary battery before recycling and powder extracted through a recycling method according to an embodiment of the invention;
Fig. 2 illustrates a scanning electron microscope image of the recycled lithium iron phosphate powder according to an embodiment of the invention;
Fig. 3 illustrates a scanning electron microscope image of the recycled lithium iron phosphate powder according to an embodiment of the invention;
Fig. 4 illustrates a transmission electron microscope image of the recycled lithium iron phosphate powder according to an embodiment of the invention;
Fig. 5 illustrates results of X-ray diffraction analysis for the recycled lithium iron phosphate powder according to an embodiment of the invention;
Fig. 6 illustrates results of Raman spectrum analysis for the recycled lithium iron phosphate powder according to an embodiment of the invention;
Fig. 7 illustrates results of XRF analysis for the recycled lithium iron phosphate powder according to an embodiment of the invention;
Fig. 8 illustrates an image of powder collected by being treated according to a comparative example and results of XRF analysis;
Fig. 9 illustrates a graph of evaluation of charge-discharge characteristics of the recycled lithium iron phosphate powder collected according to an embodiment of the invention;
Fig. 10 illustrates a graph of charge-discharge characteristics of a coin cell made of the recycled lithium iron phosphate powder collected according to an embodiment of the invention;
Fig. 11 illustrates a graph of evaluation of cycle characteristics of the coin cell made of the recycled lithium iron phosphate powder collected according to an embodiment of the invention;
Fig. 12 illustrates first powder separated from a current collector after heat treatment according to an embodiment of the invention;
Fig. 13 illustrates an image of lithium iron phosphate powder that has been treated as defective during a process and lithium iron phosphate powder heat-treated according to an embodiment of the invention;
Fig. 14 illustrates results of XRD analysis of the lithium iron phosphate powder heat-treated according to an embodiment of the invention;
Fig. 15 illustrates results of XPS analysis of the lithium iron phosphate powder heat-treated according to an embodiment of the invention; and
Fig. 16 illustrates a graph evaluation of cycle characteristics of a coin cell made of the lithium iron phosphate powder heat-treated according to an embodiment of the invention.

### DETAILED DESCRIPTION OF THE EXEMPLARY EMBODIMENTS

Hereinafter, embodiments of the invention will be described in detail with reference to the accompanying drawings so that those skilled in the art can easily carry out the invention. The invention may, however, be embodied in different forms and should not be construed as limited to the embodiments set forth herein.

In the entire specification, when it is described that one comprises (or includes or has) some elements, it should be understood that it may comprise (or include or has) only those elements, or it may comprise (or include or have) other elements as well as those elements if there is no specific limitation.

The terms "about," "substantially," etc., as used herein, are used in the sense of being close to or within the numerical values at which the inherent manufacturing and material tolerances for the mentioned meanings are presented, and are used to prevent those who would unscrupulously infringe from improperly using the invention when precise or absolute numerical values are mentioned to aid understanding. In addition, throughout the invention, "a step of..." or "a process of ..." does not imply "a step for...".

Throughout this specification, the term "combinations thereof" included in the Markush-type expression refers to one or more mixtures or combinations selected from the group consisting of the elements described in the Markush-type expression, meaning that it includes one or more elements selected from the group consisting of the elements.

Throughout this specification, the wording "A and/or B" means "A or B, or both A and B".

According to one aspect of the invention, there is provided a method for recycling an olivine-structured cathode active material, which includes: a step (a) of loading a heat treatment object containing an olivine-structured cathode active material into a heat treatment furnace; a step (b) of raising an internal temperature of the heat treatment furnace to a range of about 150°C to about 400°C; a step (c) of maintaining the increased internal temperature to thermally treat the heat treatment object; and a step (d) of discharging first powder produced after the heat treatment is completed.

The first powder may include recycled olivine-structured cathode active material, and the heat treatment object may be at least a portion of the waste lithium-ion secondary battery, battery process wastes, or wastes generated during a cathode active material manufacturing process.

In the invention, the waste lithium-ion secondary battery for recycling treatment may be targeted at the waste lithium-ion secondary battery using the olivine-structured cathode active material such as lithium iron phosphate. In addition to lithium iron phosphate (LiFePO₄), the olivine-structured cathode active material may also include lithium manganese phosphate (LiMnPO₄), lithium cobalt phosphate (LiCoPO₄), and lithium nickel phosphate (LiNiPO₄), but is not limited thereto.

In the heat treatment object put into the heat treatment furnace, the waste lithium-ion secondary battery may represent the entire waste lithium-ion secondary battery cell or may represent at least a portion thereof that includes the olivine-structured cathode active material. In addition, the waste lithium-ion secondary battery may be a "black mass" which is powder obtained by decomposing and pulverizing the waste lithium-ion secondary battery or may be process wastes or scraps discarded due to defects during the manufacturing process. In addition, the waste lithium-ion secondary battery may also be powder that is treated as defective or scrap that remains during the process of manufacturing the olivine-structured cathode active material.

In an embodiment of the invention, to effectively collect the olivine-structured cathode active material, the waste lithium-ion secondary battery may be decomposed, and only a cathode in which the current collector and the cathode material are combined may be separated and then put into the heat treatment furnace.

In the recycling process for the waste lithium-ion secondary batteries according to the related art, the waste lithium-ion battery may be decomposed, pyrolyzed at a high temperature so as to be agglomerated, and then pulverized. As a result, many impurities may be contained by including not only the cathode material and an anode material intended for the recycling, but also a case and a current collector and also may be pulverized in the agglomerated state to cause significant modifications to the cathode material and the anode material, which do not remain in their original (raw material) states.

In contrast, according to the recycling method according to the invention, an electrolyte may be removed through low-temperature heat treatment, and a binder contained in a cathode may be decomposed to simply separate the cathode active material from the current collector. In particular, the olivine-structured cathode active material having a stable structure may be collected without damage through the decomposition at the low temperature. As a result, the olivine-structured cathode active material may retain the same characteristics as a new product or have characteristics equivalent to those of the new product after undergoing simple cleaning or pickling processes and thus may be recycled in the manufacture of the lithium-ion secondary battery.

In the invention, the heat treatment process for collecting the recycled olivine-structured cathode active material may be carried out in a temperature range of about 150°C to about 400°C, more preferably in a temperature range of about 200°C to about 350°C, and even more preferably in a temperature range of about 250°C to about 350°C. The heat treatment object may be heated at a relatively low temperature of about 400°C or less, and thus, the binder, the electrolyte, etc., contained within the battery may be pyrolyzed and removed. In addition, the pyrolysis may also occur while instantaneous exothermic reaction occurs due to components such as the internal binder and electrolyte.

In addition, a preheating step in which materials that are easily volatilized or evaporated, such as moisture or electrolyte, are first removed while preheating to below 100°C before the heat treatment at a temperature range of about 150°C to about 400°C.

When compared with the recycling method according to the related art, the heat treatment may be carried out at a low temperature to reduce energy costs. In addition, since the cathode material such as lithium iron phosphate (LiFePO₄) powder is collected without damage through the low-temperature heat treatment, the collected powder may be directly recycled without the need for separate post-treatment that requires a long time and high costs.

In particular, pyrolysis at a low temperatures may form a weak reducing atmosphere due to decomposition of an organic material contained in the heat-treated material to reduce a metal state of the olivine-structured cathode active material. Thus, when the olivine-structured cathode active material obtained according to an embodiment of the invention is lithium iron phosphate powder, an atomic ratio of trivalent ions (Fe³⁺) to divalent ions (Fe²⁺) in iron ions ([Fe³⁺/[Fe²⁺]) may be equal to or less than about 1.0. Generally, in the recycled lithium iron phosphate powder that has been discharged and damaged, a proportion of trivalent ions in the powder may become significantly higher. However, However, in the recycled lithium iron phosphate powder obtained through the recycling method according to the invention, a large portion of the trivalent iron ions may be reduced, resulting in a higher content of divalent ions.

In the steps (b) and (c) described above, it is preferable to forcibly exhaust a gas generated inside the heat treatment furnace.

The importance of the emission of the gas may be in the fact that the gas generated by the decomposition during the heat treatment of the binder, the electrolytes, etc., contain fluorine. When the fluorine-containing gas remains within the heat treatment furnace, the gas may be combined with the cathode material, the anode material, etc., to form a strongly bonded lump. When the heat-treated powder is bonded to form the lump, it may be difficult to become the powdery state even through post-treatment such as the pulverizing. Thus, the rapid discharge of the gas containing fluorine may be an important issue. However, as in the related art, the heat treatment at the high temperatures may inevitably lead to the rapid generation of the fluorine-containing gas. As a result, when the gas remains in the heat treatment furnace for a long time, the agglomeration of the powder may be accelerated.

In contrast, since the method for recycling the lithium-ion secondary battery according to the invention is performed by controlling a decomposition rate of the binder through the low-temperature heat treatment, an amount of gas containing fluorine components generated per unit time may be maintained at an appropriate level. At the same time, the generated gas may be rapidly and forcibly discharged to minimize a residence time of the gas containing the fluorine components within the heat treatment furnace and prevent agglomeration of powder caused by fluorine.

During the heat treatment process, the inside of the heat treatment furnace may be depressurized to maintain a negative pressure state for the forced exhaust. When the waste lithium-ion secondary battery is heated in the heat treatment furnace, the gas generated from the decomposition of the binder, the electrolyte, a separator, etc., may be discharged to the outside due to the maintenance of the negative pressure state. To maintain the negative pressure state, a gas discharge port and an airflow adjustment unit connected to the discharge port may be disposed in the heat treatment furnace. A variety of means such as a pump, a fan, and a venturi system may be applied as the airflow adjustment unit. In particular, the venturi system may be preferable since the exhaust gas is not in direct contact with a driving motor, etc., and is implemented through a simple system.

In addition, the exhaust process may allow for the continuous or intermittent discharge of the decomposition gas, which occurs within the heat treatment furnace. When the emission amount is too high, it may be difficult to increase and maintain the internal temperature through heat treatment furnace, and thus, this process may be carried out intermittently in conjunction with the internal temperature.

Thus, the discharge of the internal atmosphere through the decompression inside the heat treatment furnace may be controlled in conjunction with the temperature inside the heat treatment furnace. This control may be achieved through a controller that controls a temperature sensor installed therein while monitoring a temperature measured by the temperature sensor.

Ultimately, the organic material and the fluorine components therein may be removed to collect the olivine-structured cathode active material in the powdery state, and thus, this may not require an additional pulverizing process, and the collected active material may be directly recycled for the manufacture of new batteries.

In an embodiment of the method for recycling the cathode material according to the invention, the exhaust gas discharged through the exhaust may pass through an aqueous solution, and thus, the fluorine component contained in the exhaust gas may be dissolved in the aqueous solution so as to be collected. The fluorine, which is contained in the exhaust gas to cause environmental problems, may be collected using the aqueous solution to prevent the environmental pollution due to the exhaust gas from occurring and increase in added value of the process.

The recycled olivine-structured cathode active material collected after the heat treatment through the method for recycling the cathode material may not contain the organic components. The impurities such as the binder may be completely removed through the low-temperature heat treatment and the forced exhaust, and thus, the organic components may be contained. As a result, the cathode active material may be easily collected in the powdery state and may be directly used in the manufacture of the lithium-ion secondary batteries without any special re-treatment.

Here, the meaning of "not containing the organic component" means that no organic component is detected in results of Raman spectrum analysis.

The above-described recycled olivine-structured cathode active material may not contain the organic component, and the fluorine content may be about 2 wt% or less or may not be contained at all. Here, the content of the fluorine may refer to results of analysis by X-ray fluorescence analysis.

In addition, the recycled olivine-structured cathode active material contained in the first powder discharged after the heat treatment process may be powder in which a conductive material is compounded. The cathode active material may also be subjected to the pickling treatment using an acid such as hydrochloric acid to remove the compounded conductive material and collect pure lithium iron phosphate powder.

The recycled olivine-structured cathode active material may be deteriorated in performance due to a lack of lithium ions or partial instability of the structure, which is caused by repeated recycling.

To improve the deteriorated performance to a level equivalent to the original performance, a post-treatment process of mixing the recycled olivine-structured cathode active material with a lithium compound may also be added. The post-treatment may be carried out by mixing the recycled lithium iron phosphate powder collected through the typical solid-state process with the lithium compounds such as lithium carbonate or lithium hydroxide, and then heat-treating the resultant mixture at a high temperature (about 600°C to about 800°C). In the post-treatment process, a reducing agent such as a succinic acid or an ascorbic acid may be mixed together with the lithium compound to more smoothly achieve the recovery of the damaged lithium iron phosphate powder.

### [Embodiment 1]

A waste lithium-ion secondary battery using a lithium iron phosphate cathode material was processed according to the recycling method of the invention to collect first powder.

After loading the waste lithium-ion secondary battery into a heat treatment furnace, the waste lithium-ion secondary battery was heat-treated while adjusting an internal temperature of the furnace to about 280°C. The temperature increased for about 6 hours and then was maintained at the increased temperature for about 12 hours. During the reaction, the internal atmosphere was discharged through a fan, and the internal temperature was maintained within a range of about 280±15°C in conjunction with a temperature sensor.

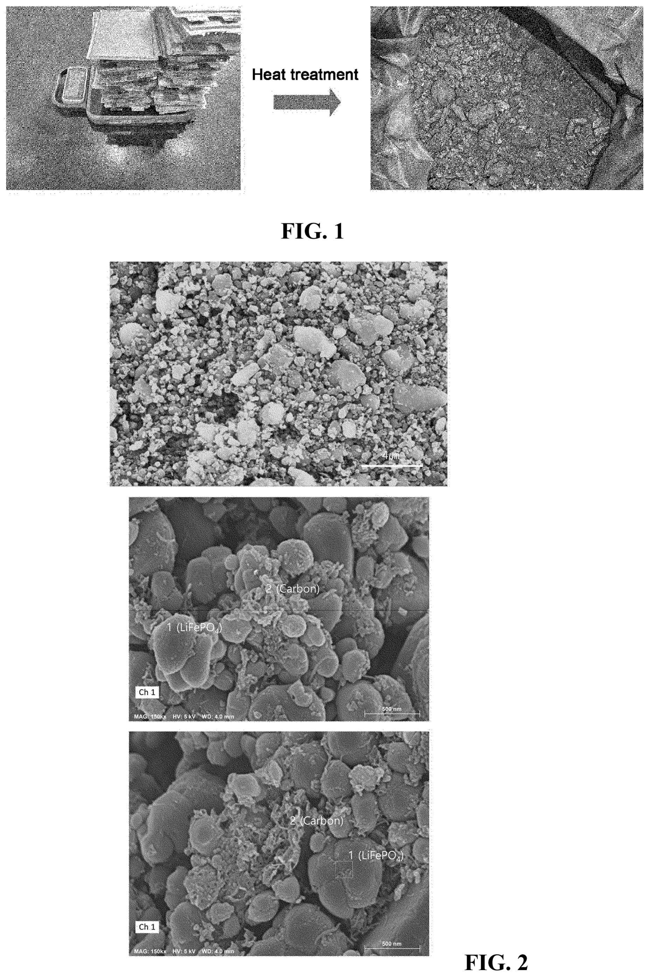

In Fig. 1, a left side shows an image of a waste battery, which includes a jelly roll in which a cathode, an anode, a separator, etc., are integrated within a pouch. The waste battery was heat-treated, and a current collector, etc., was separated from the resulting material (see the image at the right side in Fig. 1), which is discharged after an reaction is completed, through sieving, and then, the powered material may be collected to obtain the first powder. The first powder contained lithium iron phosphate powder and graphite powder. The first powder was added to water and subjected to ultrasonic treatment to separate and filter the graphite powder from the lithium iron phosphate powder due to density differences, thereby collecting final lithium iron phosphate powder.

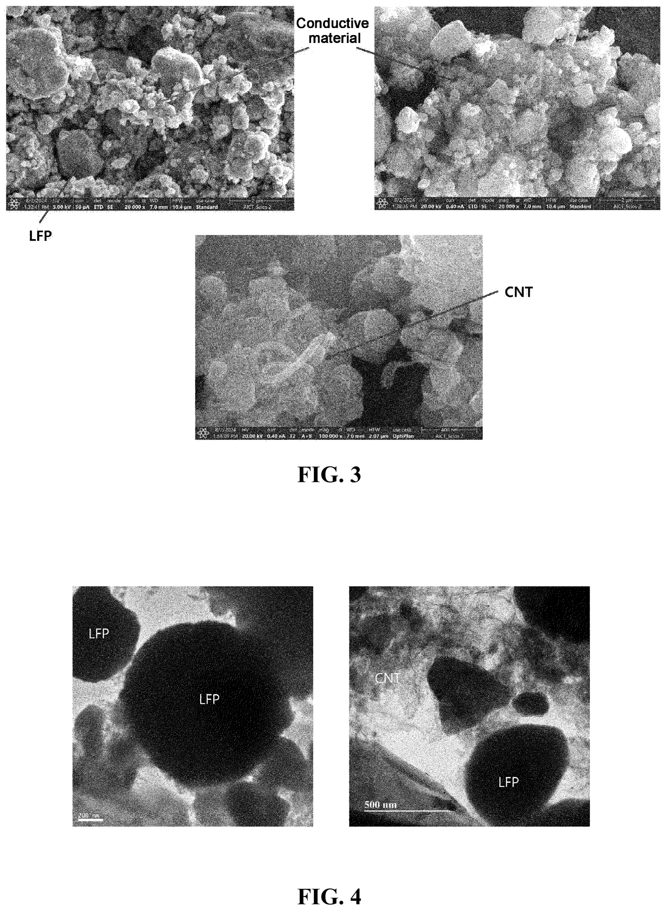

Figs. 2 and 3 illustrate scanning electron microscope images of the recycled lithium iron phosphate powder. It could be seen that it was collected in the powdery state, and in particular, it was in a state in which a conductive material such as carbon powder or CNT were compounded.

Fig. 4 illustrates a transmission electron microscope image of the lithium iron phosphate powder in which the CNT is compounded.

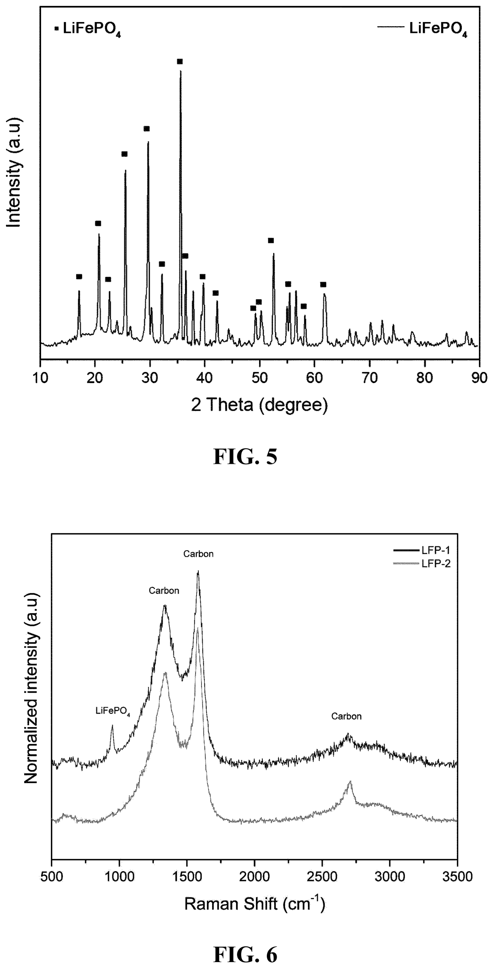

Fig. 5 illustrates results of X-ray diffraction analysis for the recycled lithium iron phosphate powder. The diffraction peak of lithium iron phosphate was confirmed, and it could be seen that no other impurities were present. As a result, it was seen that the lithium iron phosphate powder that is usable is capable of being directly collected from the waste battery without the need for additional processes by using the low-temperature heat treatment method according to the invention.

Fig. 6 illustrates results of Raman spectrum analysis for the recycled lithium iron phosphate powder. It was seen that no other peaks related to the organic material were observed in the powder except for the lithium iron phosphate and the carbon, and thus, the organic material had been completely removed.

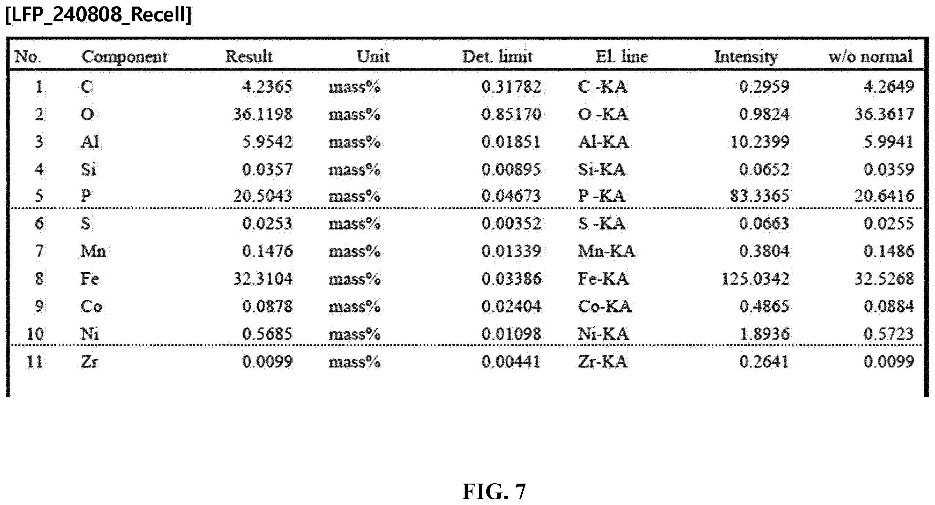

In Fig. 7, it was seen that no fluorine was detected as results of X-ray fluorescence (XRF) elemental analysis of the collected lithium iron phosphate powder.

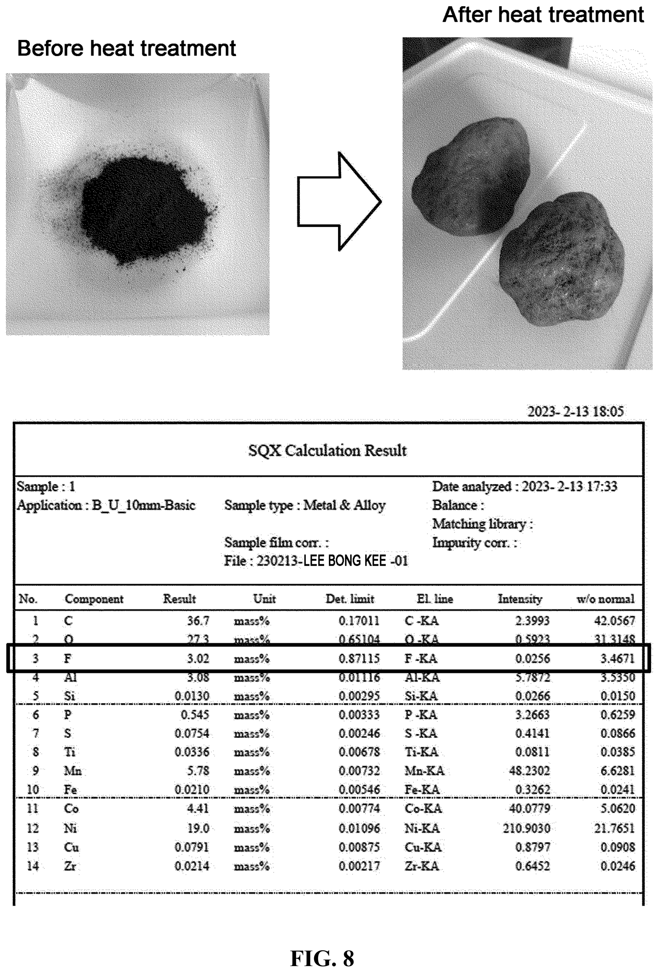

Fig. 8 illustrates powder collected after a commercial black mass is thermally treated at a low temperature, but is not exhausted. The powder collected as described above was in the form of a hard lump, and thus, it was difficult to be pulverized, and a large amount of fluorine was detected.

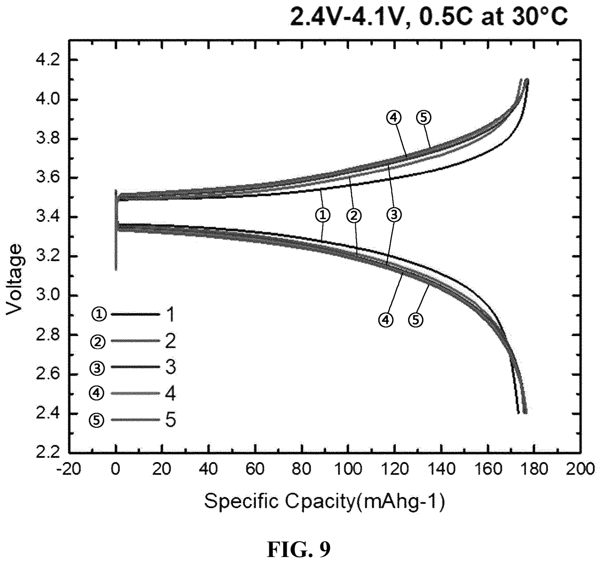

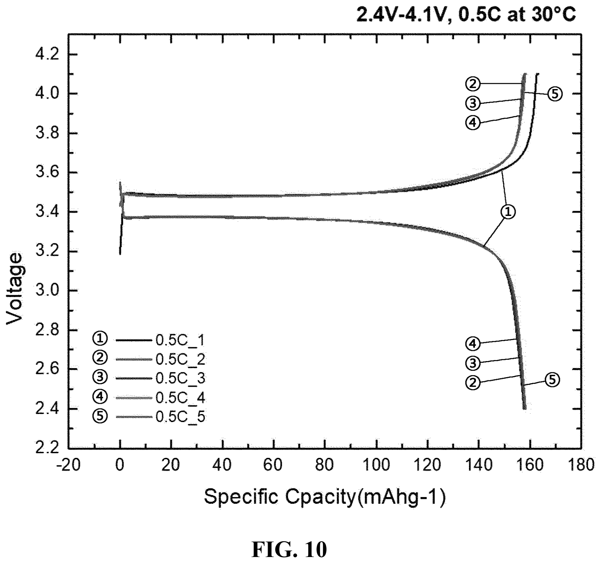

Figs. 9 and 10 illustrate results of a cell test by manufacturing a coin cell using the collected lithium iron phosphate powder. An initial capacity was determined at a charge/discharge rate of about 0.1 C, and it was found that the capacity was close to a theoretical capacity (about 170 mAh/g), and also, a high capacity was exhibited even at a charge/discharge rate of about 0.5 C.

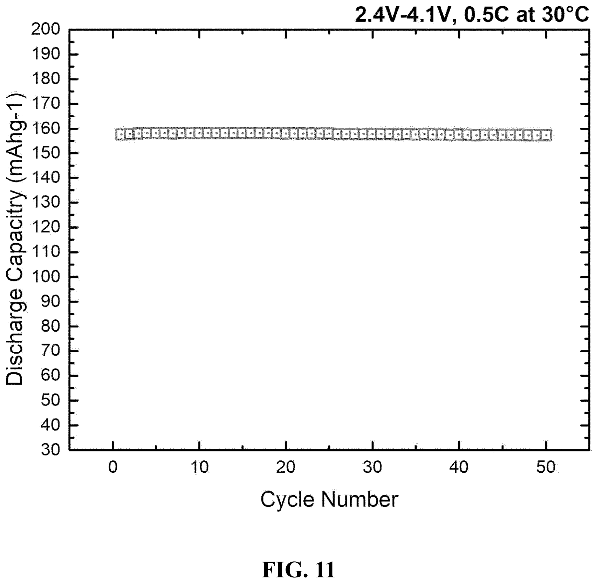

In addition, Fig. 11 shows cycle characteristics at a charge/discharge rate of about 0.5 C, and it was seen that the capacity is stably maintained.

### [Embodiment 2]

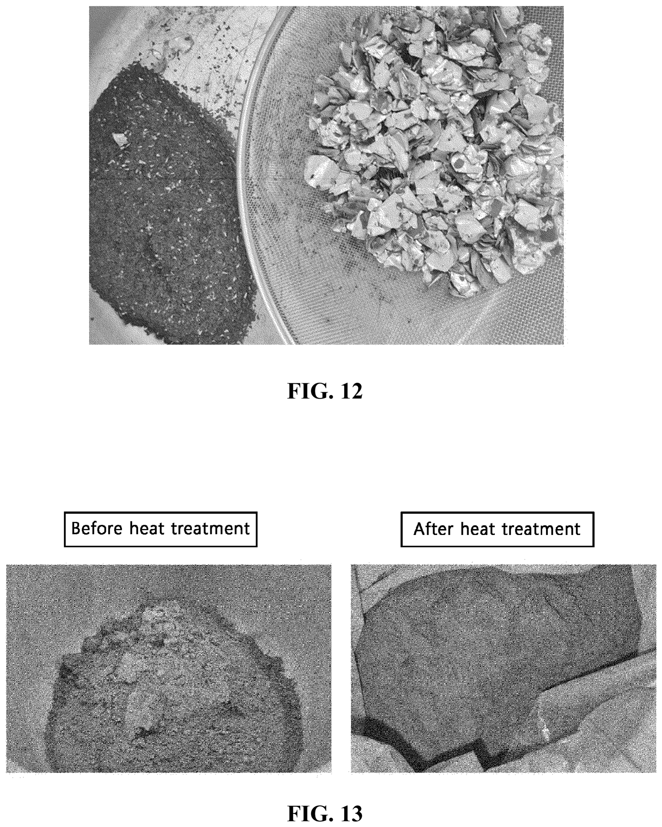

A waste lithium-ion secondary battery was disassembled to separate only a cathode, in which a cathode material is combined with a current collector, from a jelly roll, and then, heat treatment was performed in the same manner as in Embodiment 1. FIG. 12 shows first powder separated from the current collector after the heat treatment.

### [Embodiment 3]

In manufacturing of lithium iron phosphate powder, defective lithium iron phosphate powder that had been identified as defective was loaded into a heat treatment furnace, and then, waste lithium-ion secondary batteries were heat-treated while adjusting an internal temperature of the furnace to about 350°C through the heat treatment furnace. The temperature increased for about 6 hours and then was maintained at the increased temperature for about 10 hours. During the reaction, an internal atmosphere was discharged through a fan, and the internal temperature was maintained within a range of about 350±15°C in conjunction with a temperature sensor. After the heat treatment is completed, pure lithium iron phosphate powder could be obtained (see Fig. 13).

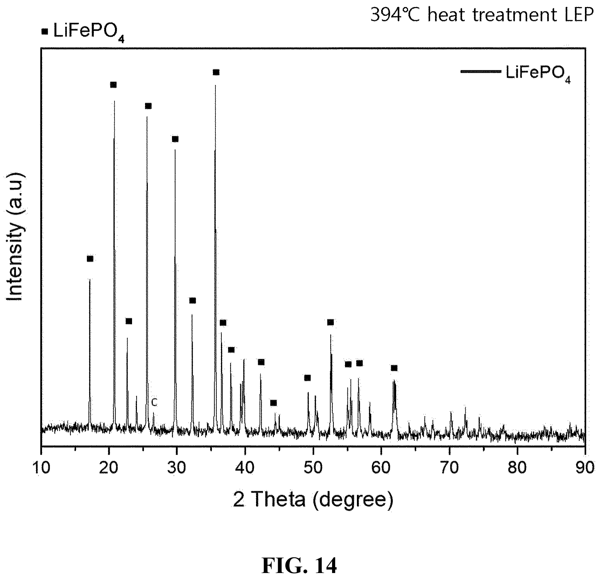

Fig. 14 illustrates results of X-ray diffraction analysis for the recycled lithium iron phosphate powder. The diffraction peak of lithium iron phosphate was confirmed, and it could be seen that no other impurities were present.

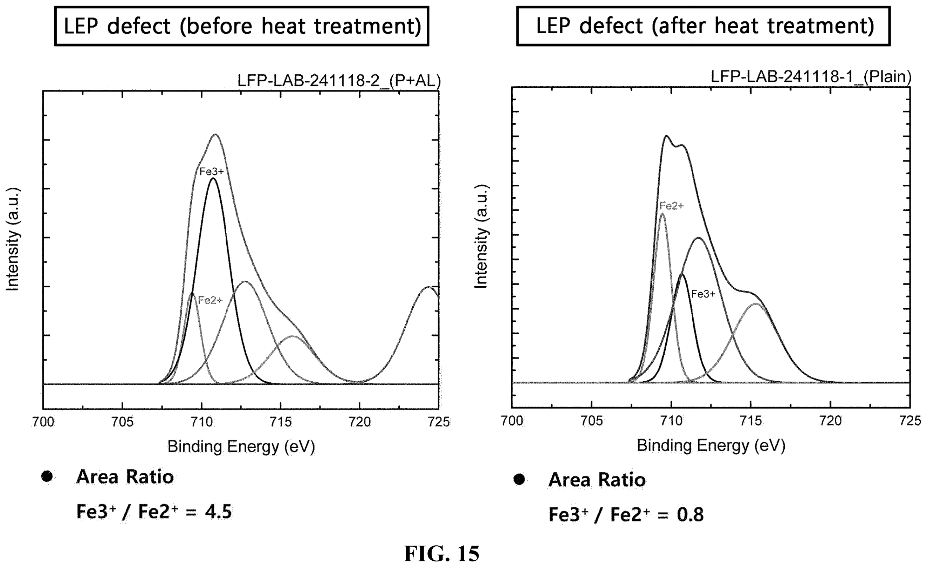

Fig. 15 illustrates results of analysis according to X-ray photoelectron spectroscopy (XPS) for powder before and after the heat treatment. Before the heat treatment, there were many Fe³⁺ ions, and a ratio of [Fe³⁺]/[Fe²⁺] reached about 4.5. However, after the heat treatment, some of the Fe³⁺ ions were reduced, resulting in an increasing ratio of Fe²⁺, and thus, the ratio of [Fe³⁺]/[Fe²⁺] decreased to about 0.8. Due to the reduction reaction, the lithium iron phosphate powder, which is in the defective process state, may have the same performance as the normal lithium iron phosphate powder.

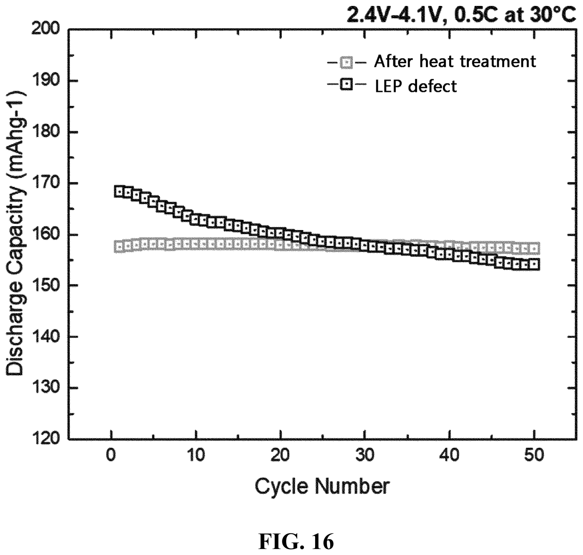

Fig. 16 illustrates results of measuring a discharge capacity after manufacturing the coin cell from the lithium iron phosphate powder for which heat treatment has been completed in this manner. It was seen that an initial capacity of the defective lithium iron phosphate powder before the heat treatment was high, but a discharge capacity dropped sharply as a cycle is progressed. In comparison, it was seen that the lithium iron phosphate powder after the heat treatment maintained a stable capacity retention rate even after about 50 cycles.

As a result, the defective lithium iron phosphate powder was recycled into high-quality lithium iron phosphate powder through the heat treatment.

As described above, since the lithium iron phosphate powder collected by the recycling method according to the invention has no difference in characteristics from newly produced lithium iron phosphate powder, it may be directly used in the manufacturing of the lithium ion battery without any additional post-treatment to manufacture the lithium ion batteries having high economic efficiency. In addition, since this process is carried out through a low-temperature heat treatment, it may be economical and environmentally friendly to increase in recycling rate of the waste lithium-ion secondary batteries and solve potential environmental limitations that may occur during the recycling.

Since the method for recycling the olivine-structured cathode active material according to the invention is economical and environmentally friendly, the recycling rate of the waste lithium-ion secondary batteries may increase, and the environmental issues that may arise during the recycling may be resolved.

In addition, the olivine-structured cathode active material that has been treated as defective during the process may be produced as the high-quality products through the recycling process to reduce the process defect rate, thereby reducing the manufacturing costs.

In addition, the lithium-ion secondary batteries having the high economic efficiency may be manufactured through the recycled lithium iron phosphate powder obtainable according to the invention.

## Claims

1. A method for recycling an olivine-structured cathode active material, the method comprising:
a step (a) of loading a heat treatment object containing an olivine-structured cathode active material into a heat treatment furnace;
a step (b) of raising an internal temperature of the heat treatment furnace to a range of about 150°C to about 400°C;
a step (c) of maintaining the increased internal temperature to thermally treat the heat treatment object; and
a step (d) of discharging first powder produced after the heat treatment is completed,
wherein the first powder comprises recycled olivine-structured cathode active material, and
the heat treatment object comprises at least a portion of the waste lithium-ion secondary battery or wastes generated during the cathode active material manufacturing process.

2. The method according to Claim 1,
further comprising, before said step (b), a step of preheating the internal temperature of the heat treatment furnace to a range of about 100°C or less.

3. The method according to Claim 1 or 2,
wherein, in results of Raman spectrum analysis for the recycled olivine-structured cathode active material, no organic component is detected.

4. The method according to one of Claims 1 to 3,
wherein, in results of X-ray fluorescence analysis (XRF) for the recycled olivine-structured cathode active material, fluorine is detected at about 2 wt% or less or is not detected at all.

5. The method according to one of Claims 1 to 4,
wherein the recycled olivine-structured cathode active material is lithium iron phosphate (LiFePO₄), and
an atomic ratio of trivalent ions (Fe³⁺) to divalent ions (Fe²⁺) in the iron ions ([Fe³⁺/[Fe²⁺]) is about 1.0 or less.

6. The method according to one of Claims 1 to 5,
wherein, in said steps (b) and (c), a gas generated inside the heat treatment furnace is forcibly exhausted.

7. The method according to Claim 6,
wherein, in said steps (b) and (c), the gas is forcibly discharged while reducing a pressure inside the heat treatment furnace.

8. The method according to Claim 6 or 7,
wherein, in said steps (b) and (c), the gas is forcibly discharged through a fan disposed in the heat treatment furnace.

9. The method according to one of Claims 6 to 8,
wherein the forced exhaust is carried out intermittently.

10. The method according to one of Claims 6 to 9,
wherein an exhaust gas discharged through the exhaust passes through an aqueous solution to dissolve a fluorine component, which is contained in the exhaust gas, in the aqueous solution, thereby collecting the fluorine component.

11. The method according to one of Claims 1 to 10,
wherein, after said step (d), the first powder is washed, and
the washing is carried out with water at a temperature of about 30°C or less.

12. The method according to one of Claims 1 to 11,
further comprising, after said step (d), a step of classifying and pickling the recycled olivine-structured cathode active material from the first powder.

13. The method according to one of Claims 1 to 12,
wherein the recycled olivine-structured cathode active material contained in the first powder is powder in which a conductive material is compounded; and/or
further comprising a step of mixing the recycled olivine-structured cathode active material with a lithium compound and heat-treating the mixture at a temperature in a range of about 600°C to about 800°C; and/or
wherein an oxalic acid or an ascorbic acid is further added to be mixed together with the lithium compound; and/or
wherein the heat treatment object is a cathode collected by decomposing the waste lithium-ion secondary battery; and/or
further comprising a step of extracting the olivine-structured cathode active material from the first powder through classification.

14. A recycled olivine-structured cathode active material produced by the method for recycling the olivine-structured cathode active material according to any one of Claims 1 to 13.

15. A lithium-ion secondary battery manufactured using the recycled olivine-structured cathode active material according to Claim 14.
